# EUROPÄISCHE PATENTANMELDUNG

(11) **EP 1 568 553 A2**
(43) Veröffentlichungstag der Anmeldung: **31.08.2005**
(21) Anmeldenummer: 05003203.6
(22) Anmeldetag: 15.02.2005
(51) Int. Cl.: B60R 22/18

(54) **Sitzintegrierte Seitenaufprallschutzeinrichtung sowie sitzintegriertes Kopf-Seitengassackmodul**

(30) Priorität: 27.02.2004 DE 102004009642
(71) Anmelder: TRW Automotive GmbH, 73553 Alfdorf (DE)
(72) Erfinder: Loos, Andreas, 73098 Rechberghausen (DE); Acker, Dominique, 74417 Gschwend (DE)
(74) Vertreter: Kitzhofer, Thomas

(57) **Zusammenfassung**

Eine sitzintegrierte Seitenaufprallschutzvorrichtung mit einem Kopf-Seitengassackmodul weist im oberen Endbereich der Rückenlehne (2) ein schalenförmiges Aufnahmegehäuse (16) auf, das einen Steg (22) besitzt, in dem der Gassack untergebracht ist, und eine sich daran anschließende Gurtbandanlagefläche (18). Der Steg (22) dient gleichzeitig als Gurtbandführung.

## Beschreibung

Die Erfindung betrifft eine sitzintegrierte Seitenaufprallschutzvorrichtung und ein sitzintegriertes Kopf-Seitengassackmodul.

Es ist bekannt, in den Fahrzeugsitz einen Thorax- oder einen Kopf-Thorax-Seitengassack zu integrieren. Darüber hinaus gibt es auch Überlegungen, reine Kopf-Seitengassäcke in den Sitz einzubauen. Diese letztgenannten reinen Kopf-Seitengassäcke sind am oberen Endbereich der Rückenlehne anzubringen.

Die Erfindung hat die Aufgabe, eine sitzintegrierte Seitenaufprallschutzvorrichtung bezüglich ihrer Sicherheitswirkung zu verbessern. Darüber hinaus soll ein sitzintegriertes Kopf-Seitengassackmodul geschaffen werden, das sich ebenfalls durch eine gute Schutzfunktion auszeichnet.

Die sitzintegrierte Seitenaufprallschutzvorrichtung nach der Erfindung weist einen am oberen Endbereich der Rückenlehne vorgesehenen Kopf-Seitengassack sowie eine am oberen Endbereich der Rückenlehne vorgesehene Gurtbandanlagefläche für den Schulterbereich eines Gurtbandes sowie eine sich zwischen Gurtbandanlagefläche und Kopf-Seitengassack erstreckende Gurtbandführung auf. Diese Gurtbandführung ist so ausgebildet, daß sie einer Verschiebung des Gurtbandes über die Austrittsöffnung des Kopf-Seitengassacks entgegenwirkt. Durch die Erfindung wird eine Beeinflussung des Entfaltungsprozesses des Gassacks durch ein nicht korrekt liegendes Gurtband verhindert, das dadurch zustande kommen kann, daß beispielsweise der Insasse das Gurtband versehentlich verschiebt oder es bei Bewegung des Insassen zu weit seitlich nach außen über den entfalteten Gassack wandert. Der Gassack ist gleichsam vom Gurt entkoppelt.

Gemäß einer bevorzugten Ausführungsform ist die Gurtbandführung als offene Führung gestaltet. Aus dieser läßt sich das Gurtband wahlweise und ohne Werkzeug entfernen, um den Gurt von der Rückenlehne zu entkoppeln, was im Falle eines nicht komplett sitzintegrierten Gurtes beim Umlegen des Sitzes oder der Rückenlehne hilfreich ist. Insbesondere bei einem Fahrzeug mit zwei Türen und Sitzen im Fond bietet diese Ausgestaltung den großen Vorteil, daß das Gurtband leicht von der Gurtbandanlagefläche bzw. vom Sitz entfernt werden kann. Das Gurtband stellt dann kein Hindernis dar, wenn Passagiere durch die Türen nach dem Vorklappen der Vordersitze zu den hinteren Sitzen gelangen wollen.

Gemäß einer weiteren Ausführungsform der Erfindung ist die Gurtbandführung als öffnungsfähige Führung gestaltet, läßt sich also ohne Zuhilfenahme von Werkzeugen öffnen und wieder schließen. Dazu kann in der Gurtbandführung z.B. eine Entriegelung oder ein Schlitz vorgesehen sein, so daß der Sicherheitsgurt aus der Gurtbandführung genommen werden kann. Durch diese alternative Ausgestaltung lassen sich dieselben Vorteile erzielen wie durch eine offene Führung. Wichtig ist, daß das Öffnen der Führung nicht etwa mit einem Öffnen des Gassackmoduls verbunden ist.

Die Gurtbandführung kann eine sich nach oben erstreckende Wandung oder, besser, ein sich nach oben erstreckender Steg sein.

Zur Reduzierung der verwendeten Teile kann die Gurtbandführung Teil eines Gassackmodulgehäuses sein, so daß die Position der Gurtbandführung relativ zu dem Gassack in engen Grenzen festgelegt ist.

Das Gassackmodulgehäuse kann ferner im Bereich der Gurtbandführung als Schale ausgeführt sein, die auf dem oberen Rand-Eckbereich der Rückenlehne sitzt und von außen sichtbar ist.

Gemäß der bevorzugten Ausführungsform ist nicht nur eine Führung für das Gurtband vorgesehen, sondern auch eine Führung für den sich entfaltenden Gassack. Diese Gassacklenkung beim Entfalten wird durch eine Gassackleitwand erreicht, die zwischen der Gurtbandanlagefläche, vorzugsweise zwischen der Gurtbandführung, und dem gefalteten Gassack vorgesehen ist. Die Gassackleitwand ist so ausgeführt, daß sie den sich entfaltenden Gassack von dem Gurtband beabstandet hält.

Die Gassackleitwand liegt zum Beispiel im Inneren des Gassackmoduls und ist Teil eines inneren Modulgehäuses.

Hierbei kann beispielsweise ein nur für den Gassack vorgesehenes Aufnahmegehäuse vorgesehen sein, in dem der Gassack sitzt und das wiederum vom Außengehäuse zumindest abschnittsweise umgeben ist. Die Gassackleitwand ist in diesem Fall ein Teil des Aufnahmegehäuses.

Vorzugsweise ist ein oberer Abschnitt des Gurtbandes zu einem fahrzeugfesten Teil geführt und dort umgelenkt. Bei dem fahrzeugfesten Teil kann es sich z.B. um die B-Säule oder, im Falle eines Rücksitzes, um die C-Säule des Fahrzeugs handeln. Alternativ ist natürlich auch eine vollständig sitzintegrierte Ausführung des Gurtes möglich.

Das erfindungsgemäße Kopf-Seitengassackmodul besitzt ein Außengehäuse, das eine Gurtbandanlagefläche und eine sich daran anschließende gegenüber der Gurtbandanlagefläche vorspringende Gurtbandführung aufweist.

Die Gurtbandführung ist bei der bevorzugten Ausführungsform Teil eines vorspringenden Steges, in dem der Gassack untergebracht ist, so daß der Gassack zumindest teilweise bereits im gefalteten Zustand oberhalb der Gurtbandanlagefläche liegt, was eine Kontaktierung des Gurtbandes beim Austreten verhindern soll.

Wie bereits erläutert, sollten die Gurtbandanlagefläche und die Gurtbandführung bevorzugt einstückig ineinander übergehen, und die Gurtbandführung sollte als offene oder öffnungsfähige Führung gestaltet sein, aus der das Gurtband bei Bedarf entfernt werden kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht einer Rückenlehne, die in der linken Hälfte aufgeschnitten ist und in die eine erfindungsgemäße Seitenaufprallschutzvorrichtung in Form eines Kopf-Seitengassackmoduls integriert ist,
- Figur 2 eine perspektivische Ansicht auf den oberen Endbereich der Rückenlehne nach Fig. 1 mit der erfindungsgemäßen Seitenaufprallschutzvorrichtung und
- Figur 3 eine Explosionsansicht der Seitenaufprallschutzvorrichtung nach Fig. 1.

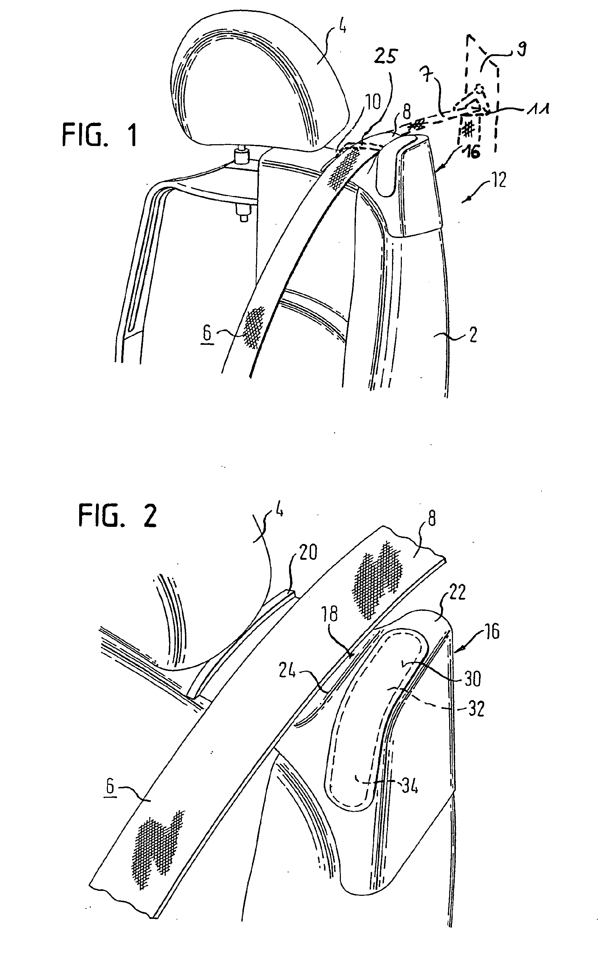

In Fig. 1 sind eine Fahrzeugsitzrückenlehne 2 mit einer Kopfstütze 4 sowie ein Gurtband 6 dargestellt. Das Gurtband 6 besitzt einen Schulterbereich 8, das ist der Bereich des Gurtbandes 6, welcher am oberen Endbereich 10 der Rückenlehne 2 entlangläuft. Vorzugsweise liegt der Schulterbereich 8 des Gurtbandes 6 sogar sowohl im angelegten als auch im abgelegten Zustand des Sicherheitsgurts am oberen Endbereich der Rückenlehne 10 an, was später noch genauer erläutert wird.

Ein oberer Abschnitt 7 des Gurtbandes 6 kann optional zu einem fahrzeugfesten Teil 9 geführt und dort mittels eines Umlenkbeschlags 11 umgelenkt werden. Bei dem fahrzeugfesten Teil kann es sich z.B. um die B-Säule oder, im Falle eines Rücksitzes, um die C-Säule des Fahrzeugs handeln. Alternativ ist natürlich auch eine vollständig sitzintegrierte Ausführung des Gurtes möglich.

In die Rückenlehne 2 ist zur Schaffung einer sitzintegrierten Seitenaufprallschutzvorrichtung ein Kopf-Seitengassackmodul 12 integriert. Dieses ist teilweise von außen sichtbar.

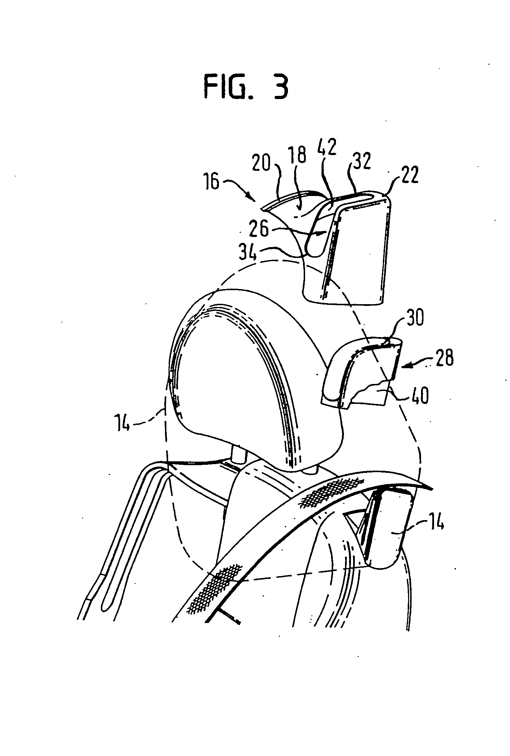

Das Kopf-Seitengassackmodul umfaßt einen gefalteten Kopf-Seitengassack 14, der in Fig. 3 in gefaltetem Zustand sowie im Umriß schematisch auch in aufgeblasenem Zustand dargestellt ist.

Der im Seitengassackmodul untergebrachte Gassack ist ein reiner Kopf-Gassack, d.h. er erstreckt sich nicht nach unten in den Thorax-Bereich.

Das Modul weist ein von außen sichtbares Modulaußengehäuse 16 auf, das schalenartig ausgeführt ist, auf dem oberen Rand-Eckbereich der Rückenlehne 2 sitzt und den Kopf-Seitengassack 14 beinhaltet.

Ein Ausleger des Modulaußengehäuses 16 erstreckt sich entlang des oberen Endes oder Randes der Rückenlehne 2 bis fast unter die Kopfstütze 4. Ein Abschnitt dieses Auslegers läuft unter dem Schulterbereich 8 des Gurtbandes 6 und stellt eine Gurtbandanlagefläche 18 dar, die etwas breiter als das Gurtband 6 ist und an der das Gurtband 6 im Schulterbereich 8 im abgelegten und vorzugsweise auch im angelegten Zustand des Fahrzeuggurtes anliegt. Links und rechts der Gurtbandanlagefläche sind Gurtbandführungen einstückig am Modulaußengehäuse 16 angeformt. Zur Kopfstütze 4 hin hat das Modulaußengehäuse 16 einen freien, sich wulstartig nach oben erstreckenden Rand 20, der auf dieser Seite die Gurtbandführung darstellt. Auf der anderen Seite des Gurtbands 6 ist die Gurtbandführung 24 durch die dem Gurtband 6 zugewandte Innenseite eines nach oben vorstehenden Stegs 22 gebildet. Die Gurtbandanlagefläche 18 liegt also in horizontaler Richtung einwärts des gefalteten Kopf-Seitengassacks 14, und die Gurtbandführung 24 befindet sich zwischen dem Kopf-Seitengassack 14 und der Gurtbandanlagefläche 18. "Einwärts" bedeutet dabei in Richtung zur Fahrzeugmitte.

Optional ist ein Verbindungselement 25 mit Entriegelung zwischen dem Rand 20 und dem Steg 22 vorgesehen, wodurch eine abschnittsweise geschlossene, jedoch öffnungsfähige Führung geschaffen wird.

Das schalen- oder kappenartige Modulaußengehäuse 16 erstreckt sich vom Steg 22 aus noch ein Stück seitlich am Seitenrand der Rückenlehne 2 nach unten (siehe Fig. 1).

Wie Fig. 3 zeigt, hat das schalenartige Modulaußengehäuse 16 einen Schacht 26, in den ein separates Aufnahmegehäuse 28, ebenfalls aus Kunststoff, eingesetzt ist, das kassettenartig ausgeführt ist und den Gassack 14 umgibt. Der Schacht 26 hat eine durch eine Stirnwand 30 des Aufnahmegehäuses 28 geschlossene Austrittsöffnung für den Gassack 14. Die Austrittsöffnung hat einen nach oben weisenden Abschnitt 32 sowie einen nach vorne weisenden Abschnitt 34, wobei beide Abschnitte 32, 34 ineinander übergehen.

Wie insbesondere Fig. 3 zu entnehmen ist, liegt ein Großteil der Austrittsöffnung oberhalb der Gurtbandanlagefläche 18. Die zwischen dem Gassack 14 und dem Gurtband liegende großflächige hintere Wandung des Aufnahmegehäuses 28 (siehe Fig. 3 im Bereich des vorderseitig weggeschnittenen Gehäuseabschnitts) dient als Gassackleitwand 40 beim Entfalten des Gassacks 14. Die Gassackleitwand 40 wird noch unterstützt durch eine Seitenwand 42 am Modulaußengehäuse 16, die den Schacht 26 begrenzt. Die Gassackleitwand 40 liegt teilweise an der Seitenwand 42 an.

Durch die Gassackleitwand 40 wird der Gassack 14 beim Entfalten nach vorne und nach oben gelenkt. Die Wand 40 hält somit den Gassack 14 vom Gurtband 6 beabstandet, sowohl beim Entfalten als auch nach dem Entfalten.

Das dargestellte Kopf-Seitengassackmodul integriert, aber separiert die Schutzfunktionen des Gurtes und des Gassacks voneinander, so daß eine Beeinflussung der beiden Systeme verhindert wird. Einerseits wird die Leitfunktion für den Gassack 14 und andererseits die Fixierungsfunktion für den Sicherheitsgurt durch ein speziell ausgebildetes Gehäuse erreicht.

Die Entfaltung des Gassacks 14 ist im Bereich des Kopfes sehr problematisch, da die Raumverhältnisse zwischen Tür und Sitz extrem beengt sind. Diese Probleme werden durch die Erfindung umgangen. Darüber hinaus werden Gassack 14 und Gurtband 6 unabhängig von der Größe des Insassen stets optimal zueinander positioniert.

Alternativ zu der gezeigten Ausführungsform ist es natürlich möglich, die Gurtbandführung nicht nur als nach oben komplett offene Führung zu gestalten, sondern das Gurtband 6 auch nach oben klammerartig zu umgreifen. Hier kann gegebenenfalls im Bereich der Gurtbandführung auch eine Entriegelung oder ein Schlitz vorgesehen sein, so daß der Sicherheitsgurt aus der Gurtbandführung genommen werden kann, wenn die Rückenlehne 2 nach vorn geklappt werden muß. In beiden Fällen kann das sitzintegrierte Kopf-Seitengassackmodul bereits vor dem Einbau des Sitzes fertig am Sitz montiert werden. Beim Einbau des vormontierten Sitzes ins Fahrzeug muß also lediglich noch das Gurtband über die Gurtanlagefläche gelegt werden, ohne daß ein zusätzlicher Montageschritt nötig wäre.

## Patentansprüche

1. Sitzintegrierte Seitenaufprallschutzvorrichtung für Fahrzeuginsassen, mit
einem am oberen Endbereich (10) der Rückenlehne (2) vorgesehenen Kopf-Seitengassack (14) und
einer im oberen Endbereich (10) der Rückenlehne (2) vorgesehenen Gurtbandanlagefläche (18) für den Schulterbereich (8) eines Gurtbandes (6) und
einer sich zwischen Gurtbandanlagefläche (18) und Kopf-Seitengassack (14) erstreckenden Gurtbandführung (24), die einem Verschieben des Gurtbandes (6) über die Austrittsöffnung (32, 34) für den Kopf-Seitengassack (14) entgegenwirkt.

2. Seitenaufprallschutzvorrichtung nach Anspruch 1, **dadurch gekennzeichnet, daß** die Gurtbandführung (24) als offene Führung gestaltet ist.

3. Seitenaufprallschutzvorrichtung nach Anspruch 1, **dadurch gekennzeichnet, daß** die Gurtbandführung (24) als öffnungsfähige Führung gestaltet ist.

4. Seitenaufprallschutzvorrichtung nach einem der vorhergehenden Ansprüche, **dadurch gekennzeichnet, daß** die Gurtbandführung (24) eine sich nach oben erstreckende Wandung ist.

5. Seitenaufprallschutzvorrichtung nach einem der vorhergehenden Ansprüche, **dadurch gekennzeichnet, daß** die Gurtbandführung (24) Teil eines sich nach oben erstreckenden Steges (22) ist.

6. Seitenaufprallschutzvorrichtung nach einem der vorhergehenden Ansprüche, **dadurch gekennzeichnet, daß** die Gurtbandanlagefläche (18) und die Gurtbandführung (24) einstückig ineinander übergehen.

7. Seitenaufprallschutzvorrichtung nach einem der vorhergehenden Ansprüche, **dadurch gekennzeichnet, daß** die Gurtbandführung (24) und die Gurtbandanlagefläche (18) Abschnitte eines schalenartigen Teiles sind, das auf den oberen Endbereich (10) der Rückenlehne (2) aufgesetzt ist.

8. Seitenaufprallschutzvorrichtung nach einem der vorhergehenden Ansprüche, **dadurch gekennzeichnet, daß** die Gurtbandführung (24) Teil eines Gassackmodulgehäuses ist.

9. Seitenaufprallschutzvorrichtung nach Anspruch 8, **dadurch gekennzeichnet, daß** das Modulgehäuse eine Schale besitzt, die am oberen Rand-Eckbereich der Rückenlehne (2) sitzt und von außen sichtbar ist.

10. Seitenaufprallschutzvorrichtung nach einem der vorhergehenden Ansprüche, **dadurch gekennzeichnet, daß** eine Gassackleitwand (40) zwischen der Gurtbandanlagefläche (18) und dem Gassack (14) vorgesehen ist, die den sich entfaltenden Gassack (14) von dem Gurtband (6) beabstandet hält.

11. Seitenaufprallschutzvorrichtung nach Anspruch 10, **dadurch gekennzeichnet, daß** die Gassackleitwand (40) im Inneren eines Gassackmoduls liegt.

12. Seitenaufprallschutzvorrichtung nach Anspruch 11, **dadurch gekennzeichnet, daß** die Gassackleitwand Teil eines Aufnahmegehäuses (28) im Inneren des Moduls ist, in dem der Gassack (14) untergebracht ist.

13. Seitenaufprallschutzvorrichtung nach einem der vorhergehenden Ansprüche, **dadurch gekennzeichnet, daß** ein oberer Abschnitt (7) des Gurtbandes (6) zu einem fahrzeugfesten Teil (9) geführt und dort umgelenkt ist.

14. Sitzintegriertes Kopf-Seitengassackmodul, mit
einem Außengehäuse (16), das eine Gurtbandanlagefläche (18) und eine sich daran anschließende, gegenüber der Gurtbandanlagefläche (18) vorspringende Gurtbandführung (20, 24) aufweist.

15. Kopf-Seitengassackmodul nach Anspruch 14, **dadurch gekennzeichnet, daß** die Gurtbandführung (24) Teil eines vorspringenden Steges (22) ist, in dem der Gassack (14) untergebracht ist.

16. Kopf-Seitengassackmodul nach Anspruch 14 oder 15, **dadurch gekennzeichnet, daß** in das Modul eine Gassackleitwand (40) zwischen der Gurtbandanlagefläche (18) und dem Gassack (14) integriert ist.

17. Kopf-Seitengassackmodul nach einem der Ansprüche 14 bis 16, **dadurch gekennzeichnet, daß** das Außengehäuse eine Austrittsöffnung für den Gassack (14) hat, die einen nach oben und nach vom weisenden Abschnitt (32, 34) besitzt.
